# EUROPÄISCHE PATENTANMELDUNG

(11) **EP 4 631 849 A1**
(43) Veröffentlichungstag der Anmeldung: **15.10.2025**
(21) Anmeldenummer: 25157623.7
(22) Anmeldetag: 13.02.2025
(51) Int. Cl.: B64C 1/20, B64D 9/00

(54) **LUFTFAHRZEUG MIT EINER PRIMÄRSTRUKTUR AUFWEISEND EIN STRUKTURELEMENT MIT VARIIERENDEM DICHTEGRADIENTEN**

(30) Priorität: 12.04.2024 DE 102024110373
(71) Anmelder: Elbe Flugzeugwerke GmbH, 01109 Dresden (DE)
(72) Erfinder: FUCHS, Patrick, 01109 Dresden (DE)
(74) Vertreter: LKGLOBAL Lorenz & Kopf Patentanwalt Attorney at Law PartG mbB

(57) **Zusammenfassung**

Es ist ein Luftfahrzeug (10) mit einer Primärstruktur (11) beschrieben. Die Primärstruktur (11) weist ein Strukturelement (20) in Form einer Wand auf und ist durch eine Erstreckung in drei Raumachsen (17, 18,19) definiert. Die Wand zeichnet sich durch einen entlang einer Längsachse (17) der Primärstruktur (11) variierenden Dichtegradienten aus und ist ausgestaltet, einen Schwerpunkt (50) des Luftfahrzeugs (10) entlang der Längsachse (17) der Primärstruktur (11) in Abhängigkeit des variierenden Dichtegradienten zwischen einem vorderen Ende (15) und einem hinteren Ende (16) des Luftfahrzeugs (10) zu verschieben.

## Beschreibung

### Technisches Gebiet

Die vorliegende Beschreibung bezieht sich im Allgemeinen auf den Aufbau von Luftfahrzeugen sowie auf ein Luftfahrzeug, welches nach bestimmten Kriterien gestaltet und aufgebaut ist. Insbesondere betrifft der hier beschriebene Aufbau eines Luftfahrzeugs ein solches Luftfahrzeug, welches basierend auf einer Passagiermaschine in eine Frachtmaschine umgerüstet wird.

### Technischer Hintergrund

Luftfahrzeuge, insbesondere Flugzeuge, können für einen Einsatz als Passagiermaschinen oder Frachtmaschinen ausgestaltet sein. Regelmäßig werden Passagiermaschinen nach einer bestimmten Verwendungszeit als Passagiermaschinen umgerüstet und kommen dann als Frachtmaschinen zum Einsatz. Bei dieser Umrüstung einer Passagiermaschine in eine Frachtmaschine erfolgen umfangreiche Anpassungen des Luftfahrzeugs, wobei die Ausmaße des Flugzeugs üblicherweise nicht geändert werden können.

Durch die Anpassungen - insbesondere auch im Innenraum - kann sich beispielsweise der Schwerpunkt des Luftfahrzeugs verschieben, weil bestimmte Komponenten aus dem Luftfahrzeug entfernt werden, um Laderaum für die Fracht zu schaffen bzw. in einer Frachtmaschine nicht benötigte Komponenten nicht unnötig als Ballast in dem Luftfahrzeug zu belassen.

### Beschreibung

Es kann daher als Aufgabe betrachtet werden, beim Umbau einer Passagiermaschine in eine Frachtmaschine eine erhöhte Ladeflexibilität zu erreichen.

Diese Aufgabe wird durch den Gegenstand der unabhängigen Ansprüche gelöst. Weitere Ausführungsformen ergeben sich aus den abhängigen Ansprüchen sowie aus der folgenden Beschreibung.

Gemäß einem Aspekt ist ein Luftfahrzeug angegeben. Das Luftfahrzeug weist eine Primärstruktur auf, wobei die Primärstruktur ein Strukturelement in Form einer Wand aufweist und wobei die Primärstruktur durch eine Erstreckung in drei Raumachsen definiert ist. Das Strukturelement weist mindestens ein Paneel mit einer Oberfläche auf. Das Strukturelement weist ein Frachtladesystem auf. Die Wand zeichnet sich durch einen entlang einer Längsachse der Primärstruktur variierenden Dichtegradienten aus und ist ausgestaltet, einen Schwerpunkt des Luftfahrzeugs entlang der Längsachse der Primärstruktur in Abhängigkeit des variierenden Dichtegradienten zwischen einem vorderen Ende und einem hinteren Ende des Luftfahrzeugs zu verschieben.

Die Wand hat also einen variierenden Dichtegradienten, insbesondere einen Dichtegradienten, welcher in Längsachse in Richtung des hinteren Endes des Rumpfes zunimmt. Auf diese Weise steigt das Gewicht der Wand nach hinten an und verschiebt den Schwerpunkt des Luftfahrzeugs in Richtung des hinteren Endes.

Bei dem Strukturelement in Form einer Wand kann es sich beispielsweise um einen Zwischenboden in dem Rumpf des Luftfahrzeugs handeln. Eine Wand, beispielsweise der Zwischenboden, besteht aus Querträgern und Längsträgern. Die Längsträger verlaufen in Längsrichtung des Luftfahrzeugs und die Querträger verlaufen in Querrichtung des Luftfahrzeugs. Beispielsweise verlaufen Querträger und Längsträger in einem rechten Winkel zueinander. Eine Mehrzahl von Paneelen werden an den Querträgern und/oder Längsträgern befestigt und bilden dadurch eine Oberfläche des Strukturelements.

Der Dichtegradient des Strukturelements in Form einer Wand kann durch verschiedene Maßnahmen variieren: (a) Verwendung von Paneelen mit höherer Dichte (Masse pro Volumeneinheit) in bestimmten Bereichen des Strukturelements, in dem o.g. Fall werden Paneele mit höherer Dichte im hinteren Bereich des Luftfahrzeugs verwendet; (b) Verwendung von Querträgern und/oder Längsträgern aus einem Material mit höherer Dichte (Masse pro Volumeneinheit) in bestimmten Bereichen des Strukturelements, also beispielsweise im hinteren Bereich des Luftfahrzeugs; (c) Verwendung von Zusatzgewichtskomponenten, die unterhalb einer Transportebene eines Frachtladesystems angeordnet sind.

Diese Maßnahmen können auch in Kombination miteinander verwendet werden, um einen gewünschten Einfluss auf das Ausmaß der Verschiebung des Schwerpunkts des Luftfahrzeugs auszuüben.

In einer Ausführungsform definiert das Frachtladesystem eine Transportebene und die Transportebene ist von der Oberfläche des Paneels beabstandet. Die Primärstruktur weist eine Zusatzgewichtskomponente auf, welche zwischen der Transportebene und der Oberfläche des Paneels angeordnet ist, um einen Schwerpunkt des Luftfahrzeugs entlang einer Längsachse der Primärstruktur in Abhängigkeit einer Masse der Zusatzgewichtskomponente zwischen einem vorderen Ende und einem hinteren Ende des Luftfahrzeugs zu verschieben.

Die Wand kann beispielsweise eine Innenwand in dem Innenraum des Rumpfes des Luftfahrzeugs sein, beispielsweise eine vertikale Wand oder eine horizontale Wand. Die Wand kann das Innenvolumen des Luftfahrzeugs in verschiedene Bereiche unterteilen bzw. voneinander trennen. Eine vertikale Wand kann als Trennwand bezeichnet werden. Eine horizontale Wand kann beispielsweise ein Zwischenboden oder ein Fußboden sein.

Die Wand kann aber auch die den Rumpf begrenzende Wand sein, also die Außenwand des Luftfahrzeugs.

Das Strukturelement, also die Wand, kann aus mehreren Paneelen bestehen. An dem Strukturelement sind Komponenten eines Frachtladesystems angeordnet, insbesondere durch Montage der Paneele an den Querträgern und/oder Längsträgern des Strukturelements. Solche Komponenten eines Frachtladesystems können beispielsweise Rollen, Haken oder Ösen sein.

Eine Fracht kann auf den Komponenten des Frachtladesystems abgelegt werden. Die Rollen dienen dazu, die Fracht in dem Innenraum des Luftfahrzeugs zu bewegen. Die Haken und Ösen dienen dazu, die Fracht zu fixieren.

Das Frachtladesystem als Ganzes wird durch die Komponenten des Frachtladesystems an allen entsprechenden Paneelen in dem Luftfahrzeug gebildet.

Die Komponenten des Frachtladesystems, insbesondere die Rollen, bilden eine Transportebene. Die Transportebene ist von der Oberfläche der Paneele beabstandet. Somit liegt die Fracht nicht auf der Oberfläche der Paneele auf, sondern auf dem Frachtladesystem. Die Fracht kann also auf den Rollen aufliegend in dem Innenraum des Luftfahrzeugs bewegt werden.

Je nach konkreter Ausgestaltung des Frachtladesystems liegt ein Abstand von einigen Zentimeter oder Zoll, beispielsweise etwa 2 Zoll (5,08 cm), zwischen der Oberfläche der Paneele und der Transportebene. Dieser Abstand bildet einen Zwischenraum und wird genutzt, um eine Zusatzgewichtskomponente anzubringen, welche den Schwerpunkt des Luftfahrzeugs in Längsrichtung verschiebt.

Die Zusatzgewichtskomponenten können Zusatzplatten, Stäbe, Streifen oder auf sonstige Weise ausgestaltete Elemente sein, die an der entsprechenden Stelle im Luftfahrzeug zusätzliches Gewicht einbringen. Die Zusatzgewichtskomponenten werden nicht zwangsläufig an jedem Paneel angebracht, sondern nach einem vorgegebenen Schema im Luftfahrzeug verteilt. Dieses zusätzliche Gewicht dient dazu, den Schwerpunkt des Luftfahrzeugs in eine bestimmte Richtung zu verschieben, beispielsweise entlang der Längsrichtung des Luftfahrzeugs zwischen der Nase und dem Heck.

Die Zusatzgewichtskomponenten können in dem Zwischenraum reversibel mit dem Paneel verbunden sein, beispielsweise durch Verschraubungen oder Klemmverbindungen. Diese Verbindungen können auch gelöst werden, um die Zusatzgewichtskomponenten zu repositionieren oder zu entfernen, um dadurch die Gewichtsverteilung in dem Luftfahrzeug zu verändern.

Indem die Zusatzgewichtskomponenten unterhalb der Transportebene montiert werden, entkoppelt man das zusätzliche Gewicht, das durch die Zusatzgewichtskomponenten eingebracht wird, vom primären Lastpfad in dem Luftfahrzeug, stellt aber gleichzeitig den Erhalt des Frachtvolumens sicher, weil die Zusatzgewichtskomponenten unterhalb der Transportebene angeordnet sind und das insgesamt verfügbare Frachtvolumen in dem Luftfahrzeug nicht reduziert wird.

Die Zusatzgewichtskomponenten können an einer Oberseite des Strukturelements (an der Seite, an der die Elemente des Frachtladesystems montiert sind) angebracht sein, und/oder an einer der Oberseite gegenüberliegenden Unterseite des Strukturelements.

Das Strukturelement ist insbesondere ein Bestandteil der Primärstruktur, also die besagte Wand, und trägt damit beispielsweise zu der Integrität und Stabilität der Primärstruktur bei. Beispielsweise erstreckt sich das Strukturelement in einem Rumpf des Luftfahrzeugs. Das Strukturelement kann beispielsweise ein Boden oder Zwischenboden innerhalb des Rumpfes des Luftfahrzeugs sein.

Der Effekt, der hier im Zusammenhang mit der Verwendung von Zusatzgewichtskomponenten beschrieben ist, wird allgemein ausgedrückt dadurch erreicht, dass das Strukturelement als Ganzes einen sich in Längsrichtung verändernden Dichtegradienten aufweist, was grundsätzlich durch die oben genannten Maßnahmen erreicht werden kann: Verwendung von Paneelen und/oder Querträgern und/oder Längsträgern mit einer höheren spezifischen Dichte und/oder durch Verwendung von Zusatzgewichtskomponenten im hinteren Bereich des Luftfahrzeugs.

Das Strukturelement zeichnet sich durch einen entlang der Längsachse der Primärstruktur variierenden Dichtegradienten aus. Beispielsweise wird dieser variierende Dichtegradient dadurch erreicht, dass nur an bestimmten ausgewählten Stellen Zusatzgewichtskomponenten angebracht werden, wodurch sich die Gewichtsverteilung in dem Luftfahrzeug verändert. Es ist aber auch denkbar, dass an bestimmten Stellen im Luftfahrzeugs Paneele (und/oder Querträger und/oder Längsträger) mit unterschiedlicher Dichte (Masse pro Volumeneinheit) verwendet werden, um eine bestimmte Gewichtsverteilung zu erreichen.

Das bedeutet, dass die Dichte und/oder die Masse dieses Strukturelements sich entlang der Längsrichtung der Primärstruktur verändert. Beispielsweise kann das Strukturelement so ausgestaltet sein, dass sich seine Dichte/Masse von einem vorderen Ende der Primärstruktur zu einem hinteren Ende der Primärstruktur gleichmäßig oder ungleichmäßig verändert. Beispielsweise kann sich die Dichte/Masse sprunghaft oder kontinuierlich verändern.

Durch diesen Ansatz ist es möglich, die Lage des Schwerpunkts des Luftfahrzeugs entlang der Längsachse der Primärstruktur zu beeinflussen und in einen gewünschten Bereich zu verschieben. Dies kann insbesondere dann vorteilhaft sein, wenn das Luftfahrzeug für eine bestimmte Beladung vorbereitet wird und nach einem Beladungsvorgang der Schwerpunkt des Gesamtsystems (also des beladenen Luftfahrzeugs) in einer gewünschten Position sein soll, um positive Flugeigenschaften des Luftfahrzeugs zu erzielen und dabei einen hohe Ladeflexibilität anzubieten, also das für die Fracht zur Verfügung stehende Ladevolumen möglichst wenig oder gar nicht einzuschränken.

Grundsätzlich beeinflusst die Lage des Schwerpunkts eines Luftfahrzeugs die Flugeigenschaften und das Verhalten des Luftfahrzeugs in der Luft. Der Schwerpunkt des Luftfahrzeugs verändert sich durch Fracht und/oder Passagiere. Üblicherweise ist der Schwerpunkt des leeren Luftfahrzeugs so bemessen, dass die Veränderung der Lage des Schwerpunkts durch Fracht und/oder Passagiere dahingehend berücksichtigt wird, dass der Schwerpunkt sich selbst nach einer Verschiebung durch Fracht und/oder Passagiere in einem gewünschten oder zugelassenen Bereich befindet.

In der vorliegenden Beschreibung ist unter einem leeren Luftfahrzeug ein Luftfahrzeug ohne Fracht und Passagiere zu verstehen. Das bedeutet, dass ein leeres Luftfahrzeug die gesamte Innenausstattung für den vorgesehenen Zweck beinhaltet, beispielsweise Sitze, Toiletten, Küchen, Gepäcksablagen, etc. für Passagierflugzeuge und Komponenten eines Frachtladesystems für ein Frachtflugzeug. Ein leeres Luftfahrzeug bezieht sich also auf das Luftfahrzeug als solches ohne Nutzlast.

Das Luftfahrzeug ist also so gestaltet und seine Innenausstattung so positioniert, dass der Schwerpunkt nach Aufnahme der Nutzlast in einem gewünschten Bereich liegt. Umgekehrt bedeutet dies üblicherweise, dass der Schwerpunkt des Luftfahrzeugs vor Aufnahme der Nutzlast in einem anderen Bereich liegt, der jedoch für die Flugeigenschaften des Luftfahrzeugs nicht optimal ist.

Um diesen möglichen Nachteil auszugleichen, wird vorliegend vorgeschlagen, dass das Strukturelement einen entlang der Längsachse der Primärstruktur variierenden Dichtegradienten hat, welcher durch die Zusatzgewichtskomponenten zwischen der Transportebene des Frachtladesystems und der Oberfläche der Paneele erzielt wird, um den Schwerpunkt des Luftfahrzeugs vor Aufnahme der Nutzlast in einen gewünschten Bereich zu verschieben, damit der Schwerpunkt nach Aufnahme der Nutzlast in einem gewünschten Bereich oder einem für die Flugeigenschaften optimalen Bereich liegt.

Gemäß einer Ausführungsform verändert die Zusatzgewichtskomponente einen Dichtegradienten oder eine Masseverteilung des Strukturelements so, dass der Dichtegradient oder die Masseverteilung entlang der Längsachse von dem vorderen Ende der Primärstruktur zu dem hinteren Ende der Primärstruktur variiert und der Dichtegradient mindestens abschnittsweise erhöht ist und einen Abschnitt mit erhöhtem Dichtegradienten definiert oder die Masse des Strukturelements sich in Richtung des hinteren Endes der Primärstruktur erhöht.

Das bedeutet, dass in einem Bereich zwischen dem vorderen Ende der Primärstruktur und dem hinteren Ende der Primärstruktur der Dichtegradient des Strukturelements an mindestens einer Stelle oder in mindestens einem Abschnitt höher ist als vor und/oder hinter diesem Abschnitt bzw. durch die Zusatzgewichtskomponente die Masse des Strukturelements in Richtung des hinteren Endes höher ist als in Richtung des vorderen Endes. Diese Stelle oder dieser Abschnitt beginnt nicht zwangsläufig an dem vorderen Ende der Primärstruktur. Vielmehr ist es bevorzugt, dass das Strukturelement nahe dem vorderen Ende der Primärstruktur eine niedrige Dichte (und damit üblicherweise einhergehend eine niedrige Masse) hat und diese Dichte zumindest in einem ersten an das vordere Ende der Primärstruktur angrenzenden Abschnitt beibehält. Der Abschnitt mit dem ansteigenden Dichtegradienten und/oder der Zusatzgewichtskomponente schließt sich an diesen ersten Abschnitt an.

Die folgende Beschreibung bezieht sich auf einen variierenden Dichtegradienten. Der Zweck dieses variierenden Dichtegradienten ist es, dass die Masseverteilung in dem Luftfahrzeug verändert wird. Dieser Zweck kann grundsätzlich auch mit den an bestimmten Stellen angeordneten Zusatzgewichtskomponenten erreicht werden. Somit gilt die folgende Beschreibung nicht nur für ein Strukturelement mit variierendem Dichtegradienten, sondern in analoger Weise und allgemein auch für die Verwendung von Zusatzgewichtskomponenten, weil diese denselben Zweck erfüllen können.

Zusatzgewichtskomponenten können in Kombination mit einem Strukturelement mit variierendem Dichtegradienten oder mit einem Strukturelement mit gleichbleibender Dichte entlang der Längsrichtung des Luftfahrzeugs verwendet werden.

Es ist auch möglich, dass der Dichtegradient des Strukturelements im Anschluss an den Abschnitt mit dem höheren Dichtegradienten wieder abfällt und bis zu dem hinteren Ende des Luftfahrzeugs beibehalten wird. Das bedeutet, dass der Abschnitt mit dem höheren Dichtegradienten zwischen dem vorderen Ende und dem hinteren Ende des Luftfahrzeugs angeordnet ist, aber an keines dieser beiden Enden unmittelbar angrenzt, sondern von jeweils einem Abschnitt mit niedrigerem Dichtegradienten umgeben ist.

Gemäß einer weiteren Ausführungsform ist der Abschnitt mit erhöhtem Dichtegradienten zwischen dem Schwerpunkt des Luftfahrzeugs und dem hinteren Ende des Luftfahrzeugs angeordnet.

Der hier beschriebene Ansatz für die Ausgestaltung eines Strukturelements in einem Luftfahrzeug bietet sich insbesondere an, wenn ein Passagierflugzeug zu einem Frachtflugzeug umgerüstet wird. Wird die Innenausstattung eines Passagierflugzeugs entfernt, um das für Fracht nutzbare Volumen zu vergrößern, verschiebt sich der Schwerpunkt des Luftfahrzeugs üblicherweise in Richtung des vorderen Endes. Um diese Verschiebung des Schwerpunktes auszugleichen und dennoch eine große Flexibilität für die Art und Weise der Beladung des umgerüsteten Flugzeugs zu ermöglichen, wird das Strukturelement wie hierin beschrieben ausgestaltet. Durch den variierenden Dichtegradienten entlang der Längsachse kann der Schwerpunkt des umgerüsteten Frachtflugzeugs in einen gewünschten Bereich verschoben werden, üblicherweise näher in Richtung des hinteren Endes des Luftfahrzeugs.

Gemäß einer weiteren Ausführungsform ist der Abschnitt mit erhöhtem Dichtegradienten ein strukturintegrierter Bestandteil des Strukturelements.

Das bedeutet insbesondere, dass das Strukturelement als solches einen entlang der Längsachse des Luftfahrzeugs variierenden Dichtegradienten hat und die Verschiebung des Schwerpunktes des Luftfahrzeugs nicht dadurch erfolgt, dass an bestimmten Positionen in dem Luftfahrzeug zusätzliche Last positioniert wird.

Somit geht diese Modifikation nicht auf Kosten des verfügbaren Frachtvolumens. Durch die entsprechende Ausgestaltung des Strukturelements mit einem Abschnitt mit erhöhtem Dichtegradienten wird der Schwerpunkt des Luftfahrzeugs beeinflusst, ohne dass hierdurch das Volumen in einem Laderaum des Luftfahrzeugs reduziert wird.

Gemäß einer weiteren Ausführungsform zeichnet sich das Strukturelement durch eine entlang der Längsachse der Primärstruktur variierende Masse aus.

Das Strukturelement hat also nicht nur eine variierende Dichte (als Maß für die Masse pro Volumeneinheit) bzw. einen variierenden Dichtegradienten entlang der Längsachse, sondern auch eine variierende, insbesondere abschnittsweise höhere oder ansteigende Masse. Insbesondere in dem Abschnitt mit erhöhtem Dichtegradienten hat das Strukturelement eine höhere Masse als vor und hinter diesem Abschnitt mit erhöhtem Dichtegradienten. In anderen Worten zeichnet sich das Strukturelement durch eine entlang der Längsachse variierende oder ungleiche Masse aus, wodurch der Schwerpunkt des Luftfahrzeugs in Richtung des hinteren Endes verschoben wird.

Gemäß einer weiteren Ausführungsform ist das Strukturelement ein flächiges Element, welches sich mindestens abschnittsweise zwischen dem vorderen Ende und dem hinteren Ende des Luftfahrzeugs erstreckt.

Beispielsweise ist das Strukturelement als Wand, Zwischenwand, Boden oder Zwischenboden ausgestaltet. Somit dient das Strukturelement in dem Luftfahrzeug als Bestandteil der Primärstruktur und unterteilt beispielsweise den gesamten zur Verfügung stehenden Innenraum des Luftfahrzeugs in mehrere Teilbereiche. Weiterhin kommt dem Strukturelement die Funktion zugute, welche oben im Hinblick auf den variierenden Dichtegradienten und die ungleich verteilte Masse beschrieben wurde und dazu dient, den Schwerpunkt des Luftfahrzeugs in einen gewünschten Bereich zu verschieben.

Gemäß einer weiteren Ausführungsform weist das Strukturelement eine Mehrzahl von Paneelen auf und die Mehrzahl von Paneelen ist in mindestens einer Längsreihe, welche sich entlang der Längsachse erstreckt, angeordnet.

Gemäß einer weiteren Ausführungsform weisen mindestens zwei Paneele aus der Mehrzahl von Paneelen eine unterschiedliche Dichte und/oder eine unterschiedliche Masse auf und realisieren auf diese Weise den variierenden Dichtegradienten des Strukturelements.

Beispielsweise können einige Paneele sogenannte Leichtbauplatten sein und mindestens ein anderes Paneel aus einem anderen Material gefertigt sein, beispielsweise aus einem Metall, welches eine höhere Dichte und eine höhere Masse als die Leichtbauplatten hat.

In einem Umbauvorgang eines Passagierflugzeugs zu einem Frachtflugzeug können also in einer Zwischenwand oder einem Boden Paneele mit unterschiedlichem Gewicht eingebaut werden, um den Schwerpunkt des Luftfahrzeugs in eine gewünschte Position oder einen gewünschten Bereich zu bringen. Werden beispielsweise Metallplatten im hinteren Bereich des Luftfahrzeugs verbaut, verschiebt sich der Schwerpunkt des Luftfahrzeugs in Richtung des hinteren Endes, wenn ansonsten in dem Boden oder der Zwischenwand Leichtbauplatten verwendet werden. Durch dieses zusätzliche Gewicht mag sich zwar das für die Nutzlast verfügbare Gewicht reduzieren, allerdings wird das verfügbare Frachtvolumen nicht eingeschränkt und der Innenraum des Luftfahrzeugs bietet eine höhere Flexibilität hinsichtlich der Beladung.

Gemäß einer weiteren Ausführungsform ist eine erste Anzahl der Mehrzahl von Paneelen Leichtbauplatten und eine zweite Anzahl der Mehrzahl von Paneelen ist aus einem Material gefertigt, welches eine höhere Dichte als die Leichtbauplatten hat.

Leichtbauplatten können auch als Sandwichplatten bezeichnet werden. Eine Sandwichplatte besteht allgemein aus zwei Deckschichten und einem zwischen den beiden Deckschichten angeordneten Kern bzw. einer Kernschicht.

Jede Deckschicht kann dabei aus mehreren Lagen oder Schichten bestehen. Die Deckschichten werden an gegenüberliegenden Flächen der Kernschicht mit der Kernschicht verbunden, beispielsweise verklebt. Jede Deckschicht enthält eine oder mehrere Schichten. Die Deckschichten sind aus stabilen Materialen mit im Vergleich zu der Kernschicht höherer Dichte gebildet. Für die Deckschichten können Materialien wie beispielsweise Holz, Kunststoffe oder verschiedene Laminate verwendet werden. Beispielsweise sind die Deckschichten aus getränktem Fasergeflecht (in verwebter oder gleichlaufender Struktur oder einer Kombination hiervon) gefertigt. Jede Schicht einer Deckschicht kann beispielsweise eine Glasfaserschicht oder Kohlefaserschicht oder ein metallisches Gelege enthalten. Die Fasern oder das metallische Gelege können in eine duroplastische Matrix eingebracht sein und somit eine Schicht der Deckschicht bilden. Beispielsweise ist das Fasergeflecht in Phenolharz getränkt.

Die Kernschicht besteht aus einem Material mit einer im Vergleich zu den Deckschichten deutlich niedrigeren Dichte. Die Dichte der Kernschicht beruht vorliegend auf deren Masse sowie deren Volumen in dem in der Sandwichplatte verbauten Zustand. Um diese vergleichsweise niedrige Dichte zu erreichen, enthält die Kernschicht typischerweise Hohlräume. Beispielsweise enthält die Kernschicht einen Schaumkern oder einen Wabenkern.

Schaumkerne bestehen beispielsweise aus PVC-Schaumstoff (Polyvinylchlorid-Schaumstoff), PET-Schaumstoff (Polyethylenterephthalat-Schaumstoff) oder jedem anderen geeigneten Schaumstoff. PET-Schaum weist eine hohe mechanische Festigkeit auf und ist deshalb gut geeignet, um Drucklasten aufzunehmen. Zudem weist PET-Schaum eine hohe Schubfestigkeit und Schubbruchdehnung auf und ist leicht.

Wabenkerne weisen mehrere Waben auf und bestehen beispielsweise aus Kunststoffen, Pappen oder anderen geeigneten Materialen mit den benötigten Eigenschaften. Ein Wabenkern enthält eine Wabenstruktur, die aus verschiedenen Kunststoffen, Pappen oder anderen geeigneten Materialien aufgebaut ist. Der Wabenkern ist so geformt, dass er eine maximale Stabilität bei gleichzeitig geringem Gewicht hat.

Die Stabilität der Kernschicht kann lokal verstärkt werden, indem die Hohlräume in der Kernschicht an vorgegebenen Stellen mit einer Kernfüllmasse gefüllt werden. Die Kernfüllmasse wird üblicherweise in die Hohlräume eingebracht, bevor die Deckschichten an gegenüberliegenden Flächen der Kernschicht befestigt werden. Als Kernfüllmasse können beispielsweise Blähglas, Blähton oder andere geeignete Füllstoffe verwendet werden.

Es können für die Kernschicht allerdings auch andere Leichtbaustoffe, wie beispielsweise Kork, verwendet werden.

Die stabilen Deckschichten verteilen Drucklasten senkrecht zu der Flächennormale der Sandwichplatte gleichmäßig auf die leichte Kernschicht, wodurch die Kernschicht in der Lage ist, die Drucklasten aufzunehmen. Außerdem werden Schublasten beim Biegen der Sandwichplatten von dem leichten Material der Kernschicht gut aufgenommen. Die Deckschichten hingegen widerstehen Zug- und Drucklasten in der Plattenebene. Dieser Aufbau führt zu ausgezeichneter Stabilität der Sandwichplatten bei gleichzeitig geringem Gewicht.

Aufgrund ihres niedrigen Gewichts bei gleichzeitig hoher Stabilität bieten Leichtbauplatten große Vorteile für den Luftverkehr. Vorliegend wird jedoch vorgeschlagen, einen Teil der Leichtbauplatten durch schwerere Platten zu ersetzen.

Die zweite Anzahl der Mehrzahl von Paneelen ist beispielsweise aus Metall, wie Stahl, gefertigt und hat somit ein deutlich höheres Gewicht als die erste Anzahl der Mehrzahl von Paneelen, die als Leichtbauplatten ausgestaltet sind.

Das Strukturelement ist beispielsweise ein Boden, welcher allgemein als horizontale Wand in einem Luftfahrzeug bezeichnet werden kann. Die Bestandteile des Frachtladesystems sind beispielsweise Rollen oder Befestigungsvorrichtungen in Form von Haken und Ösen. Fracht kann auf den Rollen in eine gewünschte Position gebracht und mit den Befestigungsvorrichtungen an dieser Position fixiert und gehalten werden.

Die variierende Dichte und Masse ist in das Strukturelement integriert bzw. in den Zwischenraum zwischen Transportebene und Oberfläche der Paneele angeordnet und beeinträchtigt nicht den Beladungsvorgang bzw. das für die Fracht zur Verfügung stehende Ladevolumen.

Im Folgenden wird beispielsweise auch ein Verfahren beschrieben, welches die Schritte für das Umrüsten einer Passagiermaschine in eine Frachtmaschine angibt. Zunächst werden aus einer Passagiermaschine diejenigen Komponenten entfernt, welche in einer Frachtmaschine keine Verwendung finden. Sodann wird in dem Rumpf des Luftfahrzeugs ein Boden oder mehrere Böden installiert. Es ist denkbar, dass der Boden der Passagiermaschine in der Frachtmaschine Verwendung findet. Ein Teil des Bodens enthält Leichtbauplatten, um das Gewicht des Luftfahrzeugs gering zu halten. Um jedoch die Verschiebung des Schwerpunkts durch die Umrüstung in eine Frachtmaschine zu berücksichtigen, werden in einem dem hinteren Ende des Luftfahrzeugs nahen Bereich die Leichtbauplatten durch schwerere Bodenplatten ersetzt, beispielsweise durch Metallplatten. Alternativ werden Zusatzgewichtskomponenten in den Zwischenraum zwischen Transportebene und Oberfläche der Paneele angebracht und dort ortsfest montiert, um die Gewichtsverteilung im Luftfahrzeug und damit den Schwerpunkt zu verändern. Durch dieses höhere Gewicht am hinteren Ende des Luftfahrzeugs wird der Schwerpunkt des Luftfahrzeugs in Richtung des hinteren Endes verschoben. Das Verfahren sieht also vor, dass in einem hinteren Bereich des Rumpfes des Luftfahrzeugs vorhandene Leichtbauplatten durch Metallplatten ersetzt werden oder, allgemein ausgedrückt, Metallplatten als Bodenpaneele oder als Zusatzgewicht verwendet werden. Dieser hintere Bereich, in welchem die schwereren Bodenpaneele verwendet werden, befindet sich üblicherweise hinter dem Schwerpunkt des leeren Luftfahrzeugs.

Die schwereren Bodenplatten sind in einem Beispiel in die Struktur des Luftfahrzeugs integriert und stellen insbesondere keine Zusatzlast dar, welche den zur Verfügung stehenden Raum für die Nutzlast reduziert. Dasselbe gilt für die Zusatzgewichtskomponenten, welche unterhalb der Transportebene angeordnet sind und ebenfalls das zur Verfügung stehende Frachtvolumen nicht reduzieren. Während also das Gewicht des Luftfahrzeugs erhöht wird und sein Schwerpunkt sich verschiebt, wird das verfügbare Frachtvolumen nicht reduziert. Dadurch, dass die schwereren Bodenplatten in die Struktur des Luftfahrzeugs integriert bzw. die Zusatzgewichtskomponenten unterhalb der Transportebene angeordnet sind, wird auch die Handhabung des Luftfahrzeugs nicht eingeschränkt. Das bedeutet insbesondere, dass ein Beladungsvorgang des Passagierluftfahrzeugs nicht angepasst werden muss, weil die schwereren Bodenpaneele die Standard-Bodenpaneele ersetzen und auch Komponenten des Frachtladesystems des Luftfahrzeugs enthalten können.

Die Anzahl und das Gewicht der in dem Frachtluftfahrzeug verbauten schwereren Bodenplatten kann in Abhängigkeit davon variieren, welches Gewicht der transportierten Fracht erwartet wird. Wenn beispielsweise die zu transportierende Fracht ein niedriges Gewicht hat, dürfen die schwereren Bodenplatten ein höheres Gewicht und/oder eine höhere Dichte haben, weil das Gewicht der Fracht kaum dazu beiträgt, den Schwerpunkt des Luftfahrzeugs signifikant zu beeinflussen. In diesem Beispiel kann der Schwerpunkt mit den verbauten schwereren Bodenplatten dennoch maßgeblich verschoben werden, dass die Nutzlast/Fracht maßgeblich zu dem Gesamtgewicht des beladenen Luftfahrzeugs beiträgt.

### Kurze Beschreibung der Zeichnungen

Nachfolgend werden anhand der beigefügten Zeichnungen einige Details näher beschrieben. Die Darstellungen sind schematisch und nicht maßstabsgetreu. Gleiche Bezugszeichen beziehen sich auf gleiche oder ähnliche Elemente. Es zeigen:
- Fig. 1: eine schematische Darstellung eines Luftfahrzeugs.
- Fig. 2: eine schematische Darstellung einer Primärstruktur in Form eines Rumpfes eines Luftfahrzeugs.
- Fig. 3: eine schematische Darstellung eines Strukturelements aufweisend eine Mehrzahl von Paneelen.
- Fig. 4: eine schematische Darstellung eines Paneels mit Komponenten eines Frachtladesystems.
- Fig. 5: eine schematische Darstellung eines Paneels mit einer Zusatzgewichtskomponente zwischen einer Transportebene und einer Oberfläche des Paneels.

### Detaillierte Beschreibung

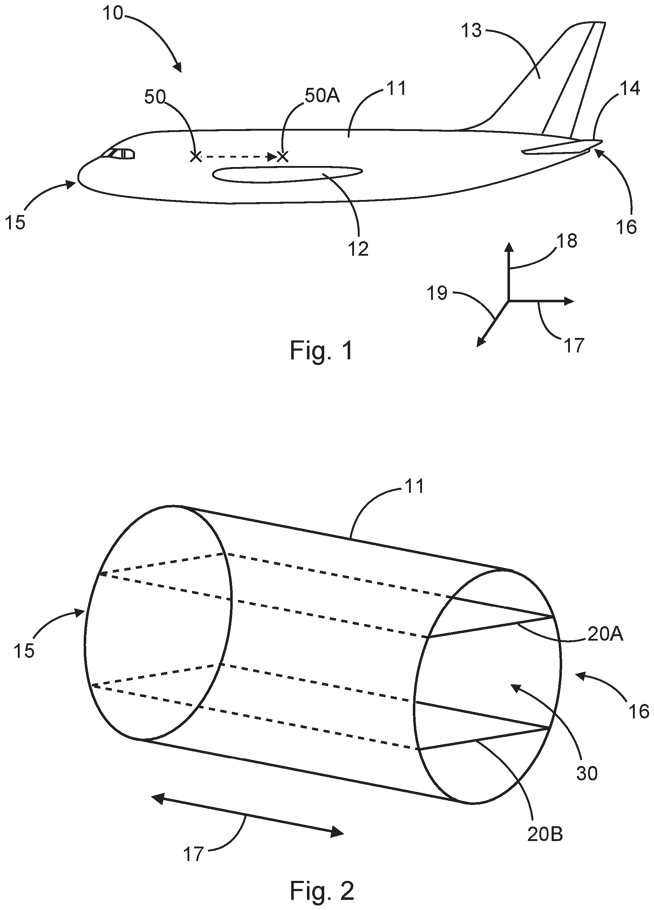

Fig. 1 zeigt eine schematische Darstellung eines Luftfahrzeugs 10. Das Luftfahrzeug 10 weist eine Primärstruktur 11 auf, welche in diesem Beispiel der Rumpf des Luftfahrzeugs 10 ist. An dem Luftfahrzeug 10 bzw. der Primärstruktur 11 sind weitere Komponenten des Luftfahrzeugs angeordnet, insbesondere Tragflächen 12, ein Seitenruder 13 und ein Höhenruder 14.das Luftfahrzeug 10 zeichnet sich durch ein vorderes Ende 15 und ein hinteres Ende 16 aus.

In Fig. 1 ist weiterhin ein Koordinatensystem mit den drei Achsen 17,18 und 19 gezeigt. Die Achse 17 entspricht der Längsachse und erstreckt sich zwischen dem vorderen Ende 15 und dem hinteren Ende 16. Luftfahrzeugs 10. Die Achse 19 entspricht der Querachse und erstreckt sich von Tragfläche zu Tragfläche. Die Achse 18 entspricht der Hochachse. Die Hochachse 18 steht senkrecht sowohl auf der Längsachse 17 als auch auf der Querachse 19.

In Fig. 1 ist weiterhin schematisch der Schwerpunkt 50 des Luftfahrzeugs 10 gezeigt. Die Lage des Schwerpunkts 50 wird insbesondere durch die Geometrie, die Ausmaße sowie das Gewicht des Luftfahrzeugs 10 und die Verteilung des Gewichts in dem Luftfahrzeug 10 definiert. Wenn eine Passagiermaschine umgerüstet wird, um als Frachtmaschine verwendet zu werden, verschiebt sich der Schwerpunkt 50 in Richtung des vorderen Endes 15, weil das Gesamtgewicht des Luftfahrzeugs 10 und auch die Verteilung des Gewichts in dem Luftfahrzeug 10 durch die Umrüstung in eine Frachtmaschine typischerweise reduziert wird, ohne dass sich die Ausmaße des Luftfahrzeugs 10 verändern. Um eine gewünschte Flexibilität für die Beladung der Frachtmaschine zu erreichen und/oder die Flugeigenschaften des Luftfahrzeugs 10 positiv zu beeinflussen, kann es vorteilhaft sein, den Schwerpunkt 50 des Luftfahrzeugs 10 entlang der Längsachse 17 weiter in Richtung des hinteren Endes 16 zu verschieben, wie in Fig. 1 durch den Schwerpunkt 50A gezeigt.

Diese Verschiebung des Schwerpunkts in Richtung des hinteren Endes 16 wird durch die hier beschriebenen Maßnahmen hinsichtlich des Dichtegradienten und/oder der Gewichtsverteilung der Primärstruktur elf erreicht.

Fig. 2 zeigt eine schematische Darstellung der Primärstruktur 11. In diesem Beispiel ist die Primärstruktur 11 der Rumpf des Luftfahrzeugs 10. Nach der Umrüstung einer Passagiermaschine in eine Frachtmaschine wird in dem Rumpf mindestens ein Boden 20A, 20B montiert, welcher die zu transportierende Fracht trägt und fixiert. In dem hier gezeigten Beispiel sind in dem Rumpf zwei Böden 20A, 20B angebracht, um mehrere voneinander getrennte Frachträume 30 anzubieten.

Die Böden erstrecken sich zwischen dem vorderen Ende 15 und dem hinteren Ende 16 in einer Ebene, welche von der Längsachse 17 und der Querachse 19 aufgespannt wird.

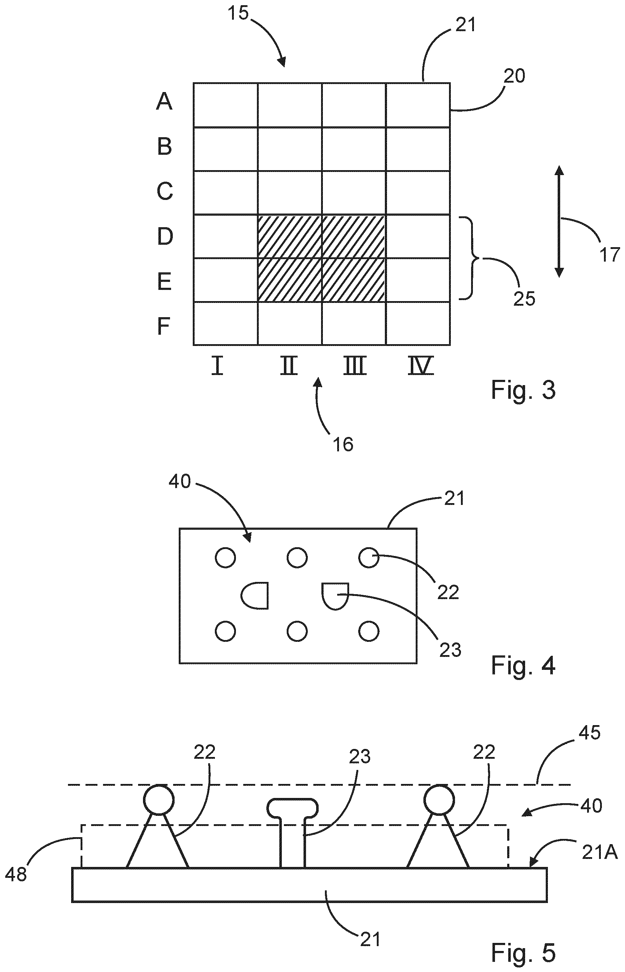

Fig. 3 zeigt eine schematische Darstellung eines Strukturelements 20, in diesem Fall den Aufbau eines Bodens 20A, 20B. Das Strukturelement 20 weist mehrere Paneele 21 auf und ist in Längsreihen I bis IV sowie in Querreihen A bis F unterteilt. Die Längsreihen I bis IV erstrecken sich entlang der Längsachse 17 zwischen dem vorderen Ende 15 und dem hinteren Ende 16 wohingegen sich die Querreihen A bis F entlang der Querachse 19 erstrecken.

Das Strukturelement 20 besteht aus einer Mehrzahl von Paneelen 21, welche zumindest in der von der Längsachse 17 und der Querachse 19 aufgespannten Ebene gleiche Ausmaße haben und somit von dem Gedanken der Modularität geprägt sind. In anderen Worten kann jedes der Paneele 21 grundsätzlich an verschiedenen Positionen platziert und befestigt werden.

In dem Beispiel der Fig. 3 weist das Strukturelement 20 einen Abschnitt 25 mit erhöhtem Dichtegradienten auf. Konkret sind die Paneele an den Positionen D-II, D-III, E-II, E-III aus einem anderen Material gefertigt als die anderen Paneele des Strukturelement 20. Beispielsweise sind die Paneele an den Positionen D-II, D-III, E-II, E-III aus Metall, wohingegen die anderen Paneele Leichtbauplatten sind. Damit weist das Strukturelement 20 entlang der Längsachse 17 zwischen dem vorderen Ende 15 und dem hinteren Ende 16 einen variierenden Dichtegradienten auf. Der Abschnitt 25 mit erhöhtem Dichtegradienten ist näher an dem hinteren Ende 16 als an dem vorderen Ende 15 positioniert. Somit wird durch die beschriebene Ausgestaltung des Strukturelements 20, wie in Fig. 1 gezeigt, der Schwerpunkt 50 des zu einer Frachtmaschine umgerüsteten Luftfahrzeugs 10 in Richtung des hinteren Endes 16 verschoben.

Das Strukturelement 20 ist in einer bevorzugten Ausgestaltung ein Boden oder zwischen Boden in dem Rumpf des Luftfahrzeugs 10. Es ist jedoch auch denkbar, dass das Strukturelement 20, wie es hierin beschrieben ist, als Zwischenwand in einer von der Längsachse 17 und der Hochachse 18 aufgespannten Ebene ausgestaltet ist. Auf diese Weise wird ebenfalls der Schwerpunkt 50 des Luftfahrzeugs zwischen dem vorderen Ende 15 und dem hinteren Ende 16 in Abhängigkeit von der konkreten Ausgestaltung des Strukturelements 20 verschoben. Unter der konkreten Ausgestaltung des Strukturelements 20 ist insbesondere zu verstehen, aus welchem Material, mit welcher Dichte und welcher Masse die jeweiligen Paneele 21 ausgestaltet sind und wo diese Paneele 21 installiert sind.

Die Querträger der Zwischenwand werden in Fig. 3 durch die horizontalen Linien gekennzeichnet, wohingegen die Längsträger in Fig. 3 durch die vertikalen Linien dargestellt werden.

Fig. 4 zeigt einen beispielhaften Aufbau eines Paneels 21. Das Paneel 21 weist Komponenten eines Frachtladesystems 40 auf, nämlich eine Mehrzahl von Rollen 22 sowie eine oder mehrere Befestigungsvorrichtung 23 in Form von Haken und/oder Ösen.

Das Paneel 21, wie es in Fig. 4 gezeigt ist, zeigt den prinzipiellen Aufbau jedes Paneels 21 aus Fig. 3, wobei die Rollen 22 und die Befestigungsvorrichtungen 23 in Abhängigkeit der Position eines Paneels 21 in dem Strukturelement 20 unterschiedlich ausgestaltet sein können und auch die Anzahl der Rollen 22 und Befestigungsvorrichtungen 23 sich unterscheiden können.

Prinzipiell sind aber sämtliche Paneele 21 in dem Strukturelement 20 als strukturintegrierte Komponenten ausgestaltet, sodass auch in dem Abschnitt 25 mit erhöhtem Dichtegradienten keine zusätzlichen Bauteile angebracht werden müssen, um den Schwerpunkt 50 des Luftfahrzeugs 10 in einen gewünschten Bereich zu verschieben. Bei der Umrüstung einer Passagiermaschine in eine Frachtmaschine wird die Struktur des Luftfahrzeugs 10 so aufgebaut, dass sich der Schwerpunkt in den gewünschten Bereich des Luftfahrzeugs 10 verschiebt. Somit ist es nicht nötig, zusätzliche Lasten einzubringen, die einzig dem Zweck dienen, den Schwerpunkt des Luftfahrzeugs in den gewünschten Bereich zu verschieben. Solche zusätzlichen Lasten bringen unnötigen Ballast mit sich und reduzieren dadurch die Beladungsflexibilität auf der einen Seite und auch das mögliche Gewicht der Zuladung auf der anderen Seite.

Fig. 5 zeigt ein Paneel 21 mit einer Oberfläche 21A. An dem Paneel sind Komponenten eines Frachtladesystems 40 angeordnet, nämlich Rollen 21 und Befestigungsvorrichtungen 23 in Form von Haken oder Ösen, wie schon in Bezug auf Fig. 4 beschrieben. Auch wenn in Fig. 5 lediglich zwei Rollen 21 und eine Befestigungsvorrichtung 23 gezeigt ist, sollte verstanden werden, dass das Frachtladesystem 40 eine Vielzahl solcher Komponenten beinhalten kann.

Die Rollen 22 definieren eine Transportebene 45. Frachtgut, welches auf dem Frachtladesystem 40 abgelegt ist, befindet sich auf Höhe der Transportebene 45 und liegt auf den Rollen 22 auf. Die Befestigungsvorrichtungen 23 sind typischerweise etwas niedriger ausgestaltet als die Rollen 22 und ragen nicht bis zur Transportebene 45.

Jedenfalls wird zwischen der Transportebene 45 und der Oberfläche 21A des Paneels 21 ein Zwischenraum definiert. In diesem Zwischenraum können Zusatzgewichtskomponenten 48 angeordnet sein, um die Masse und die Masseverteilung in dem Luftfahrzeug auf gewünschte Weise zu beeinflussen.

Die Zusatzgewichtskomponente 48 kann beispielsweise eine Metallplatte sein, die auf das Paneel angebracht wird. Die Metallplatte kann Ausnehmungen oder Löcher aufweisen, nämlich an den Stellen, an denen die Komponenten 22, 23 des Frachtladesystems 40 angeordnet sind. Alternativ kann die Zusatzgewichtskomponente 48 eine Stange oder ein Streifen Material mit hoher Masse sein. Beispielsweise ist die Dichte (Masse pro Volumen) der Zusatzgewichtskomponente höher als die Dichte des Materials, das für das Paneel 21 verwendet ist, um eine Masseverteilung in dem Luftfahrzeug wirksam zu beeinflussen.

Die Zusatzgewichtskomponente 48 wird üblicherweise reversibel mit dem Paneel 21 verbunden, beispielsweise durch Schraubverbindungen oder Klemmverbindungen. Es ist aber auch denkbar, einige Zusatzgewichtskomponenten 48 permanent mit dem jeweiligen Paneel 21 zu verbinden, beispielsweise durch eine Klebeverbindung.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 10: Luftfahrzeug
- 11: Primärstruktur, Rumpf
- 12: Tragflächen
- 13: Seitenruder
- 14: Höhenruder
- 15: vorderes Ende
- 16: hinteres Ende
- 17: Längsachse
- 18: Hochachse
- 19: Querachse
- 20: Strukturelement, Wand oder Boden
- 20A: erste Wand/Boden
- 20B: zweite Wand/Boden
- 21: Paneel
- 21A: Oberfläche
- 22: Rollen
- 23: Befestigungsvorrichtung, Haken, Ösen
- 25: Abschnitt mit erhöhtem Dichtegradienten
- 30: Laderaum für Fracht
- 40: Frachtladesystem
- 45: Transportebene
- 48: Zusatzgewichtskomponente
- 50: Schwerpunkt des Luftfahrzeugs
- 50A: Schwerpunkt nach Modifikation

- A-F: Querreihe
- I-IV: Längsreihe

## Patentansprüche

1. Luftfahrzeug (10), aufweisend eine Primärstruktur (11),
wobei die Primärstruktur (11) durch eine Erstreckung in drei Raumachsen (17, 18, 19) definiert ist;
wobei die Primärstruktur (11) mindestens ein Strukturelement (20) in Form einer Wand aufweist;
wobei das Strukturelement (20) mindestens ein Paneel (21) mit einer Oberfläche (21A) aufweist;
wobei das Strukturelement (20) ein Frachtladesystem (40) aufweist;
wobei die Wand sich durch einen entlang einer Längsachse (17) der Primärstruktur (11) variierenden Dichtegradienten auszeichnet und ausgestaltet ist, einen Schwerpunkt (50) des Luftfahrzeugs (10) entlang der Längsachse (17) der Primärstruktur (11) in Abhängigkeit des variierenden Dichtegradienten zwischen einem vorderen Ende (15) und einem hinteren Ende (16) des Luftfahrzeugs (10) zu verschieben.

2. Luftfahrzeug (10) nach Anspruch 1,
wobei das Frachtladesystem (40) eine Transportebene (45) definiert;
wobei die Transportebene (45) von der Oberfläche (21A) des mindestens einen Paneels (21) beabstandet ist;
wobei die Primärstruktur (11) eine Zusatzgewichtskomponente (48) aufweist, welche zwischen der Transportebene (45) und der Oberfläche (21A) des Paneels (21) angeordnet ist, um einen Schwerpunkt (50) des Luftfahrzeugs (10) entlang einer Längsachse (17) der Primärstruktur (11) in Abhängigkeit einer Masse der Zusatzgewichtskomponente (48) zwischen einem vorderen Ende (15) und einem hinteren Ende (16) des Luftfahrzeugs (10) zu verschieben.

3. Luftfahrzeug (10) nach Anspruch 2,
wobei die Zusatzgewichtskomponente (48) einen Dichtegradienten oder eine Masseverteilung des Strukturelements (20) so verändert, dass der Dichtegradient oder die Masseverteilung entlang der Längsachse (17) von dem vorderen Ende (15) der Primärstruktur (11) zu dem hinteren Ende (16) der Primärstruktur (11) variiert und der Dichtegradient mindestens abschnittsweise erhöht ist und einen Abschnitt (25) mit erhöhtem Dichtegradienten definiert oder die Masse des Strukturelements sich in Richtung des hinteren Endes der Primärstruktur erhöht.

4. Luftfahrzeug (10) nach einem der voranstehenden Ansprüche,
wobei der Abschnitt (25) mit erhöhtem Dichtegradienten zwischen dem Schwerpunkt (50) des Luftfahrzeugs (10) und dem hinteren Ende (16) des Luftfahrzeugs (10) angeordnet ist.

5. Luftfahrzeug (10) nach einem der voranstehenden Ansprüche,
wobei der Abschnitt (25) mit erhöhtem Dichtegradienten ein strukturintegrierter Bestandteil des Strukturelements (20) ist.

6. Luftfahrzeug (10) nach einem der voranstehenden Ansprüche,
wobei sich das Strukturelement (20) durch eine entlang der Längsachse (17) der Primärstruktur (11) variierende Masse auszeichnet.

7. Luftfahrzeug (10) nach einem der voranstehenden Ansprüche,
wobei das Strukturelement (20) ein flächiges Element ist, welches sich mindestens abschnittsweise zwischen dem vorderen Ende (15) und dem hinteren Ende (16) des Luftfahrzeugs (10) erstreckt.

8. Luftfahrzeug (10) nach Anspruch 7,
wobei das Strukturelement (20) eine Mehrzahl von Paneelen (21) aufweist und die Mehrzahl von Paneelen (21) in mindestens einer Längsreihe (I-IV), welche sich entlang der Längsachse (17) erstreckt, angeordnet ist.

9. Luftfahrzeug (10) nach Anspruch 8,
wobei aus der Mehrzahl von Paneelen (21) mindestens zwei Paneele eine unterschiedliche Dichte und/oder eine unterschiedliche Masse aufweisen und auf diese Weise den variierenden Dichtegradienten des Strukturelements (20) realisieren.

10. Luftfahrzeug (10) nach Anspruch 8 oder 9,
wobei eine erste Anzahl der Mehrzahl von Paneelen (21) Leichtbauplatten sind und eine zweite Anzahl der Mehrzahl von Paneelen (21) aus einem Material gefertigt sind, welches eine höhere Dichte als die Leichtbauplatten hat.
